(19) Europäisches Patentamt
European Patent Office
Office européen des brevets

(11) **EP 4 015 468 A1**

(12) **EUROPÄISCHE PATENTANMELDUNG**

(43) Veröffentlichungstag:
**22.06.2022   Patentblatt 2022/25**

(21) Anmeldenummer: 20214538.9

(22) Anmeldetag: **16.12.2020**

(51) Internationale Patentklassifikation (IPC):
***C03B 19/14*** (2006.01)      ***C03B 20/00*** (2006.01)

(52) Gemeinsame Patentklassifikation (CPC):
**C03B 19/1423;** C03B 2207/06; C03B 2207/32

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Heraeus Quarzglas GmbH & Co. KG 63450 Hanau (DE)**

(72) Erfinder:
• **Thürer, Martin 63450 Hanau (DE)**
• **Lehmann, Walter 63450 Hanau (DE)**
• **Trommer, Martin 63450 Hanau (DE)**

(74) Vertreter: **Gille Hrabal Partnerschaftsgesellschaft mbB Patentanwälte Brucknerstraße 20 40593 Düsseldorf (DE)**

(54)   **VERFAHREN ZUR HERSTELLUNG VON SYNTHETISCHEM QUARZGLAS**

(57)   Beschrieben wird ein Verfahren zur Herstellung von synthetischem Quarzglas, bei welchem die in dem Verfahren verwendete Synthese-Flamme in einem targetlosen Zustand ein Verhältnis aus der Halbwertsbreite (Full Width at Half Maximum, $FWHM_{vert}$) der vertikalen Leuchtintensität zu der Halbwertsbreite (Full Width at Half Maximum, $FWHM_{hori}$) der horizontalen Leuchtintensität größer als 10 aufweist, wobei die Leuchtintensitäten in Candela/$mm^2$ gemessen werden.

**Beschreibung**

Die vorliegende Erfindung betrifft ein Verfahren zur Herstellung von synthetischem Quarzglas sowie eine entsprechende Vorrichtung zur Durchführung des erfindungsgemäßen Verfahrens.

Zur Herstellung von synthetischem Quarzglas werden aus einer siliziumhaltigen Ausgangssubstanz in einem CVD-Verfahren durch Hydrolyse oder Oxidation $SiO_2$-Teilchen erzeugt und auf einem sich bewegenden Träger abgeschieden. Es kann dabei zwischen Außen- und Innenabscheideverfahren unterschieden werden. Bei Außenabscheideverfahren werden die $SiO_2$-Teilchen auf der Außenseite eines rotierenden Trägers aufgebracht. Als Beispiele für entsprechende Außenabscheideverfahren seien das so genannte OVD-Verfahren (Outside Vapour Phase Deposition), das VAD-Verfahren (Vapour Phase Axial Deposition) oder das PECVD-Verfahren (Plasma Enhanced Chemical Vapour Deposition) genannt. Als bekanntestes Beispiel für ein Innenabscheideverfahren steht das MCVD-Verfahren (Modified Chemical Vapour Deposition), bei dem auf der Innenwandung eines von außen erhitzten Rohres $SiO_2$-Teilchen abgeschieden werden.

Bei hinreichend hoher Temperatur im Bereich der Trägeroberfläche kommt es zu einem unmittelbaren Verglasen der $SiO_2$-Teilchen, was auch als "Direktverglasen" bekannt ist. Im Unterschied dazu ist beim so genannten "Sootverfahren" die Temperatur beim Abscheiden der $SiO_2$-Teilchen so niedrig, dass eine poröse $SiO_2$-Sootschicht erhalten wird, die dann in einem separaten Verfahrensschritt zu transparentem Quarzglas gesintert wird. Sowohl das Direktverglasen als auch das Sootverfahren führen zu einem dichten, transparenten, hochreinen, synthetischen Quarzglas.

In den Verfahren des Standes der Technik zur Herstellung von synthetischem Quarzglas wird in der Regel eine Verfahrensweise angewendet, um eine ausreichende Abscheideeffizienz der $SiO_2$-Teilchen zu gewährleisten, wobei unter Abscheideeffizienz der Quotient aus dem Gewicht des erzeugten Sootkörpers und der rechnerisch maximal erzeugbaren Gesamtmenge an $SiO_2$ unter der Annahme einer vollständigen Umsetzung des Siliziums aus der eingesetzten siliziumhaltigen Ausgangsverbindung verstanden wird.

Um einen kohlenstoffhaltigen Sootkörper, der nach dem Verglasen einen niedrigeren OH-Wert (gut für Fiberanwendungen) aufweist, bereitzustellen, schlägt die DE 10 2011 121 153 A vor, während der Abscheidung der $SiO_2$-Teilchen die Polysiloxanverbindung im Vergleich zu Sauerstoff überstöchiometrisch in die Flamme zu führen, also eine sogenannte fette Flamme bei der Abscheidung zu verwenden.

Ein weiteres Verfahren zur Herstellung von synthetischem Quarzglas ist in der Druckschrift DE 101 02 611 A offenbart, in welcher beschrieben wird, dass Inhomogenitäten in dem abgeschiedenen Quarzglas vermieden werden können, wenn die $SiO_2$-Partikel im Zeitpunkt ihres Auftreffens auf die Ablagerungsfläche bei einem Öffnungswinkel der Brennerflamme zwischen 3° und 15° und bei einem Abstand zwischen Abscheidebrenner und Ablagerungsfläche zwischen 160 mm und 240 mm abgeschieden werden. Diese Druckschrift offenbart keine weitergehenden Informationen dahingehend, wie die Abscheideeffizienz verbessert werden kann.

Insgesamt sind die Verfahren des Standes der Technik im Hinblick auf die Abscheideeffizienz des siliziumhaltigen Ausgangsmaterials immer noch verbesserungswürdig und es besteht daher Bedarf nach einem Verfahren zur Herstellung von synthetischem Quarzglas, mit welchem die Abscheideeffizienz des siliziumhaltigen Ausgangsmaterials verbessert werden kann. Mit einer verbesserten Abscheideeffizienz gehen geringe Herstellungskosten für das synthetische Quarzglas einher.

Im Rahmen der vorliegenden Erfindung wird unter der Abscheideeffizienz der Quotient aus dem Gewicht des auf dem Targetrohr abgeschiedenen $SiO_2$ zu der rechnerisch (bei vollständiger Umsetzung allen Siliziums aus der eingesetzten Vorläufermenge) erzeugten Gesamtmenge an $SiO_2$ verstanden.

Gelöst wird diese Aufgabe erfindungsgemäß nun durch ein Verfahren zur Herstellung von synthetischem Quarzglas, welches zunächst durch die folgenden Verfahrensschritte gekennzeichnet ist:

(1) Verdampfen eines Einsatzmaterials, das mindestens eine siliziumorganische Ausgangsverbindung enthält, unter Bildung eines Einsatzmaterialdampfes;

(2) Zuführen des Einsatzmaterialdampfes aus Verfahrensschritt (1) zu einer Reaktionszone, in welcher der Einsatzmaterialdampf in Gegenwart von Sauerstoff in einer Flamme verbrannt wird und durch Oxidation und/oder durch Hydrolyse zu $SiO_2$-Soot-teilchen umgesetzt wird;

(3) Abscheiden der aus Verfahrensschritt (2) resultierenden $SiO_2$-Sootteilchen auf einer Ablagerungsfläche unter Ausbildung eines Sootkörpers,

(4) gegebenenfalls Trocknen und Verglasen des aus Verfahrensschritt (3) resultierenden Sootkörpers unter Bildung von synthetischem Quarzglas.

Das erfindungsgemäße Verfahren ist dann dadurch gekennzeichnet, dass die in dem Verfahren verwendete Synthese-Flamme in einem targetlosen Zustand ein Verhältnis aus der Halbwertsbreite (Full Width at Half Maximum, $FWHM_{vert}$) der vertikalen Leuchtintensität zu der Halbwertsbreite (Full Width at Half Maximum, $FWHM_{hori}$) der horizontalen Leuchtintensität größer als 10 aufweist.

Um die Halbwertsbreiten der Leuchtintensität in vertikaler und horizontaler Richtung zu ermitteln, wird wie folgt verfahren:

Zur Bestimmung der *"vertikalen* Leuchtintensität" der Flamme (und deren Halbwertsbreite $FWHM_{vert}$) in einer bestimmten Höhe über dem Brenner wird die Leuchtintensität der Flamme (in $cd/mm^2$) aus der flächigen Kameraabbildung *horizontal* pro Pixelreihe der Kamera integriert über die gesamte Höhe der Flamme (ergibt als Einheit cd/mm) ermittelt. Man erhält dann die Leuchtintensität der Flamme als Funktion des vertikalen Abstands vom Brenner und kann aus der Kurvenform, die ein Maximum hat, eine Halbwertsbreite (in mm) der vertikalen Leuchtintensität ermitteln.

Zur Bestimmung der *"horizontalen* Leuchtintensität" der Flamme (und deren Halbwertsbreite $FWHM_{hori}$) in einem bestimmten Abstand von der Mittelachse des Brenners wird die Leuchtintensität der Flamme (in $cd/mm^2$) aus der flächigen Kameraabbildung *vertikal* pro Pixelreihe der Kamera integriert über die gesamte Breite der Flamme (ergibt als Einheit cd/mm) ermittelt. Man erhält dann die Leuchtintensität der Flamme als Funktion des horizontalen Abstandes von der Brennermittelachse und kann aus der Kurvenform, die ein Maximum hat, eine Halbwertsbreite (in mm) der horizontalen Leuchtintensität ermitteln.

Erfindungsgemäß wurde herausgefunden, dass, wenn in eine wie vorstehend definierte Flamme ein Target (Rohr, Stab oder Sootkörper) zur Abscheidung der $SiO_2$-Teilchen eingebracht wird, eine überlegene Abscheideeffizienz erreicht wird.

Daher bezieht sich die vorliegende Erfindung auf eine Synthese-Flamme, die targetlos betrieben wird. Unter einer targetlosen Flamme wird eine Syntheseflamme verstanden, die ohne Aufbaurohr betrieben wird, da ansonsten die Flammenform von der Dicke des Targetrohres (oder Sootkörpers) und dem Abstand des Brenners zur Targetfläche und der Targettemperatur abhängen würde. Die Synthese-Flamme ist dabei im Allgemeinen im Wesentlichen ungestört. Die erfindungsgemäß verbesserte Abscheideeffizienz ergibt sich, wie bereits definiert, durch den Quotienten aus dem Gewicht des erzeugten Sootkörpers und der rechnerisch maximal erzeugbaren Gesamtmenge an $SiO_2$ unter der Annahme einer vollständigen Umsetzung des Siliziums aus der eingesetzten siliziumhaltigen Ausgangsverbindung.

Jede Flamme, die in gattungsgemäßen Verfahren verwendet wird, sendet eine Eigenstrahlung (Chemielumineszenz) aus, die von chemisch gebildeten kurzlebigen Zwischenprodukten, wie den Radikalen OH*, CH* oder $C_2$* verursacht wird und für das Leuchten der Flamme im ultravioletten und sichtbaren Spektralbereich verantwortlich ist.

Da die Chemilumineszenz sehr lokal auftritt und die Leuchtintensitäten im UV und IR schwer zu bestimmen sind, wird zur Bestimmung der Flammenform eine Kamera verwendet, die nach dem im experimentellen Teil weiter unten beschriebenen Verfahren auf die abgeleitete SI-Einheit Candela kalibriert wurde. Candela entspricht im Allgemeinen der Wahrnehmung des menschlichen Auges und berücksichtigt die UV und IR-Anteile nicht, für welche spezielle Kameras und Fenster nötig wären. Der Großteil der auf Candela kalibrierten Intensität entstammt daher der Schwarzkörperstrahlung der in der Flamme entstandenen $SiO_2$ und Kohlenstoffrußteilchen

In bevorzugten Ausführungsformen des erfindungsgemäßen Verfahrens wird eine Flammenform des Brenners verwendet, in welcher (targetlos) das Verhältnis aus der Halbwertsbreite (Full Width at Half Maximum, $FWHM_{vert}$) der vertikalen Leuchtintensität zu der Halbwertsbreite (Full Width at Half Maximum, $FWHM_{hori}$) der horizontalen Leuchtintensität größer als 12, weiter bevorzugt größer als 14, noch weiter bevorzugt größer als 15, ist, wobei die Leuchtintensitäten in $Candela/mm^2$ gemessen werden.

Im Rahmen der vorliegenden Erfindung ist es weiter bevorzugt, wenn die im Verfahrensschritt (2) durchzuführende Umsetzung des Einsatzmaterialdampfs bei einer Luftzahl im Brenner von kleiner gleich 1,00 durchgeführt wird.

Insbesondere sind in dem erfindungsgemäßen Verfahren Luftzahlen bevorzugt, die kleiner gleich 0,95, noch weiter bevorzugt kleiner gleich 0,90, noch weiter bevorzugt kleiner gleich 0,85, noch weiter bevorzugt kleiner gleich 0.80, noch weiter bevorzugt kleiner gleich 0,78, noch weiter bevorzugt kleiner gleich 0,76, sind.

Die vorstehende Luftzahl wird vorzugsweise während mindestens 20 %, weiter bevorzugt mindestens 30 %, noch weiter bevorzugt mindestens 40 %, noch weiter bevorzugt mindestens 50 %, noch weiter bevorzugt mindestens 60 %, noch weiter bevorzugt mindestens 70 %, noch weiter bevorzugt mindestens 80 %, noch weiter bevorzugt mindestens 90 %, noch weiter bevorzugt mindestens 95 %, noch weiter bevorzugt mindestens 97 %, noch weiter bevorzugt mindestens 98 %, noch weiter bevorzugt mindestens 99 %, der zuvor definierten Aufbauzeit in dem erfindungsgemäßen Verfahren eingehalten.

Erfindungsgemäß wurde zusätzlich herausgefunden, dass die Abscheideeffizienz der $SiO_2$-Teilchen deutlich verbessert werden kann, wenn die Gesamtmenge an Sauerstoff, die während der in Verfahrensschritt (2) vorgesehenen Umsetzung dem Brenner aktiv und zentral zugeführt wird, stöchiometrisch oder bevorzugt unterstöchiometrisch ist, so dass eine Luftzahl kleiner gleich 1 resultiert.

Erfindungsgemäß ist somit vorgesehen, dass die Gasströme in dem Brenner der erfindungsgemäßen Vorrichtung, d.h. das Verhältnis von aktiv (d.h. unter Druck) zugeführtem Sauerstoff aus dem Brenner (inkl. Feed-Sauerstoff) zu allen brennbaren Stoffen, die dem Brenner aktiv (d.h. unter Druck) zugeführt werden, so eingestellt werden, dass eine Luftzahl für alle dem Brenner aktiv (d.h. unter Druck) zugeführten Gase kleiner oder gleich 1 realisiert wird.

Die Luftzahl $\lambda$ ist definiert als das Verhältnis der tatsächlich zur Verfügung stehenden Sauerstoffmenge zur mindestens notwendigen Sauerstoffmenge, die für eine stöchiometrisch vollständige Verbrennung theoretisch benötigt wird.

Im Rahmen der vorliegenden Erfindung wird unter der Gesamtmenge an Sauerstoff, die zur Umsetzung der siliziumorganischen Ausgangsverbindung im Brenner (allenfalls) stöchiometrisch verwendet wird, die Menge an Sauerstoff verstanden, welche dem Brenner unter Druck aktiv zugeführt wird. Aus dieser Definition der Gesamtmenge an Sauerstoff ergibt sich, dass die Menge an Sauerstoff, die der Flamme passiv (d.h. drucklos) aus der Atmosphäre zuströmt wird, zu der erfindungsgemäß vorgesehenen Gesamtmenge an Sauerstoff nicht hinzugerechnet wird. Damit wird insbesondere Sauerstoff ausgeschlossen, welcher während der Verbrennung der siliziumorganischen Ausgangsverbindung aus der dem Brenner umgebenden Atmosphäre in die Flamme eindiffundiert oder durch Unterdruck eingesaugt wird.

Darüber hinaus wird unter der Menge an Sauerstoff, die zur Umsetzung der siliziumorganischen Ausgangsverbindung (und etwaiger brennbarer Hilfsgase) im Brenner (allenfalls) stöchiometrisch verwendet wird, die Gesamtmenge an Sauerstoff verstanden, die dem Brenner zentral zugeführt wird.

Unter dem Begriff von "dem Brenner zugeführtem Sauerstoff" wird bei einem konzentrischen Brenner diejenige Menge an Gesamtsauerstoff verstanden, die auf der Flammenseite des Brenners diesen in einem Oberflächenbereich aktiv verlässt, wobei der Oberflächenbereich gebildet wird durch eine im Wesentlichen kreisförmige Fläche mit einem Radius r, wobei sich der Radius r senkrecht zur Richtung der Bait-Rod-Drehachse von dem Zentrum der Stoffdüse oder dem Mittelpunkt des Stoffdüsenensembles (Düse(n) zur Einspeisung der siliziumhaltigen Ausgangsverbindung) erstreckt und der Radius r etwa 1/5 des mittleren Abstands der Stoffdüse(n) zur Abscheideoberfläche des gebildeten Sootkörpers entspricht.

Unter dem Begriff von zentral dem Brenner zugeführtem Sauerstoff wird bei einem Linearbrenner diejenige Menge an Gesamtsauerstoff verstanden, die auf der Flammenseite des Brenners diesen in einem Oberflächenbereich aktiv verlässt, wobei der Oberflächenbereich gebildet wird durch eine Fläche, die einen Anstand d senkrecht zur Richtung der Bait-Rod-Drehachse von dem Zentrum der Stoffdüse oder der Mittellinie des Stoffdüsenensembles (Düse(n) zur Einspeisung der siliziumhaltigen Ausgangsverbindung) aufweist und der Abstand d etwa 1/5 des mittleren Abstands der Stoffdüse(n) zur Abscheideoberfläche des gebildeten Sootkörpers entspricht.

Die (allenfalls) stöchiometrische Verwendung von Sauerstoff wird vorzugsweise während der vollständigen Aufbauzeit des Sootkörpers eingehalten, wobei unter der Aufbauzeit die Zeitdauer der Zuführung der siliziumhaltigen Ausgangsverbindung in das erfindungsgemäße Verfahren

$$t_{Aufbauzeit} = \Delta t_{Start - Ende\ Zuführung\ siliziumhaltige\ Ausgangsverbindung}$$

verstanden wird.

Die Anwendung einer Luftzahl von kleiner gleich 1 bei der Verbrennung führt im Rahmen der vorliegenden Erfindung zu den nachfolgend diskutierten technischen Effekten.

Die Verwendung von einem fetten Brenngemisch (einhergehend mit einer Luftzahl von kleiner 1) führt zu einem späteren, lokalen Zünden nur der Randgebiete der Flamme, in welchen bereits genug $O_2$ des Brennstofffeeds eindiffundiert ist. Der Kernbereich der Flamme ist durch das zu fette Gemisch zündunwilliger. Dadurch zündet nur ein kleineres Gasvolumen gleichzeitig und der Sauerstoff muss erst nachdiffundieren. Dadurch wird die Expansion der heißen Verbrennungsgase von Gebieten, die durchgezündet haben, in andere Flammenbereiche vermieden und die Flamme weniger turbulent.

Das Gasvolumen, das über eine zündfähige Mischung verfügt, erstreckt sich bei der erfindungsgemäßen Verfahrensweise weit nach oben und hat eine geringere laterale Ausdehnung. Das führt zu einer laminareren Flamme. Die damit einhergehende Auswirkung ist, dass die schmalere, laminarere Flamme sich besser an den Sootkörper anlegt und einen stabileren Staupunkt direkt unter dem Sootkörper ausbildet. Dieses führt zu kürzeren Diffusionswegen für die $SiO_2$-Teilchen zur Abscheidungsoberfläche des Sootkörpers und erhöht die Verweilzeit im Staupunkt, was insgesamt eine höhere Abscheideeffizienz bewirkt.

Bei dem erfindungsgemäßen Verfahren handelt es sich insbesondere um ein Outside Vapor Deposition Method (OVD)-Verfahren, Vapor Axial Deposition (VAD)-Verfahren oder ein Soot-Boule-Verfahren. Entsprechende OVD- und VAD-Verfahren sind dem Fachmann hinlänglich bekannt und ein Soot-Boule-Verfahren ist beispielsweise bekannt aus der US 8,230,701.

Durch die Einstellung der Luftzahl auf die vorstehend genannten Werte von kleiner 1 wird insbesondere auch die erfindungsgemäße Flammenform eingestellt.

Im Nachfolgenden werden die einzelnen Verfahrensschritte des erfindungsgemäßen Verfahrens näher beschrieben:

## Verfahrensschritt (1) - Verdampfen des Einsatzmaterials

Im Verfahrensschritt (1) wird ein Einsatzmaterial, das mindestens eine siliziumorganische Ausgangsverbindung enthält, unter Bildung eines Einsatzmaterialdampfes verdampft. Bei der polymerisierbaren siliziumhaltigen Ausgangsverbindung handelt es sich bevorzugt um eine polymerisierbare Polyalkylsiloxanverbindung.

Grundsätzlich kann erfindungsgemäß jede polymerisierbare Polyalkylsiloxanverbindung, welche sich zur Herstellung von synthetischem Quarzglas eignet, verwendet werden. Im Rahmen der Erfindung umfasst der Begriff Polyalkylsiloxan sowohl lineare (umfassend auch verzweigte Strukturen) als auch cyclische Molekularstrukturen.

Besonders geeignete cyclische Vertreter sind Polyalkylsiloxane mit der allgemeinen Summenformel

$$Si_pO_p(R)_{2p},$$

wobei p eine ganze Zahl größer gleich 3 ist. Der Rest "R" ist eine Alkylgruppe, im einfachsten Fall eine Methylgruppe.

Polyalkylsiloxane zeichnen sich durch einen besonders hohen Anteil an Silizium pro Gewichtsanteil aus, was zur Wirtschaftlichkeit ihres Einsatzes bei der Herstellung von synthetischem Quarzglas beiträgt.

Die Polyalkylsiloxanverbindung ist dabei vorzugsweise ausgewählt aus der Gruppe, bestehend aus Hexamethylcyclotrisiloxan (D3), Octamethylcyclotetrasiloxan (D4), Dekamethylcyclopentasiloxan (D5), Dodecamethylcyclohexasiloxan (D6), Tetradekamethylcycloheptasiloxan (D7), Hexadecamethylcyclooctasiloxan (D8) sowie deren linearen Homologen und beliebigen Mischungen der vorgenannten Verbindungen. Die Notation D3, D4, D6, D7 und D8 entstammt dabei einer von General Electric Inc. eingeführten Notation, bei der "D" die Gruppe $[(CH_3)_2Si]$-O- repräsentiert.

Im Rahmen der vorliegenden Erfindung können auch Mischungen der vorgenannten Polyalkylsiloxanverbindungen verwendet werden.

Wegen der großtechnischen Verfügbarkeit in hoher Reinheit wird derzeit Octamethylcyclotetrasiloxan (OMCTS) bevorzugt eingesetzt. Im Rahmen der vorliegenden Erfindung ist es daher insbesondere bevorzugt, wenn es sich bei der Polyalkylsiloxanverbindung um Octamethylcyclotetrasiloxan (D4) handelt.

Grundsätzlich ist es möglich, dass das Einsatzmaterial vordem Einbringen in Verfahrensschritt (1) einer Aufreinigung unterzogen wird. Dem Fachmann sind solche Aufreinigungsverfahren bekannt. In einer bevorzugten Ausführungsform wird das Einsatzmaterial jedoch zuvor keinem vorgeschaltetem Aufreinigungsverfahren unterzogen.

Die Verdampfung des Einsatzmaterials kann mit oder ohne Anwesenheit einer Trägergas-Komponente erfolgen. Bevorzugt erfolgt die Verdampfung des Einsatzmaterials in Anwesenheit eines Trägergases, da dadurch die Verdampfung bei Temperaturen unterhalb des Siedepunktes der siliziumorganischen Ausgangsverbindung erfolgen kann. Als Trägergas wird üblicherweise ein Inertgas, beispielsweise Stickstoff oder Argon, verwendet. Wenn ein Trägergas verwendet wird, so liegt das Molverhältnis der siliziumorganischen Ausgangsverbindung zum Trägergas bevorzugt im Bereich von 0,01 bis 2; besonders bevorzugt im Bereich von 0,02 bis 1,5 und ganz besonders bevorzugt im Bereich von 0,05 bis 1,25. Insbesondere ist es bevorzugt, dass als Trägergas Stickstoff mit einem Feuchtegehalt < 40 Volumenppm eingesetzt wird und als siliziumorganische Ausgangsverbindung OMCTS. Dabei ist es des Weiteren bevorzugt, dass das molekulare Verhältnis von OMCTS zu Stickstoff im Bereich von 0,015 bis 1,5 liegt.

Der Verfahrensschritt des Verdampfens ist dem Fachmann an sich bekannt. Dabei wird die siliziumorganische Ausgangsverbindung je nach gewähltem molekularem Verhältnis der siliziumorganischen Ausgangsverbindung und Trägergas vorzugsweise bei Temperaturen zwischen 120 und 200 °C in eine dampfförmige Phase überführt. Dabei sollte die Verdampfungstemperatur in der Verdampfungskammer immer mindestens einige Grad oberhalb des Taupunktes der siliziumorganischen Ausgangsverbindung sein. Der Taupunkt ist wiederum abhängig vom gewählten molekularen Verhältnis aus siliziumorganischer Ausgangsverbindung und Trägergas. In einem bevorzugten Ausführungsverfahren wird dazu die siliziumorganische Ausgangsverbindung vor der Verdampfung auf Temperaturen zwischen 40 und 120 °C vorerwärmt und anschließend in eine Verdampfungskammer versprüht, die eine höhere Temperatur als die Vorerwärmung der Einsatzstoffe aufweist. Das inerte Trägergas kann in einer bevorzugten Ausführungsform zusätzlich auf Temperaturen von bis zu 250 °C vorerwärmt werden, bevor es der Verdampfungskammer zugeführt wird. Von Vorteil ist, dass die Temperatur in der Verdampfungskammer im Mittel immer oberhalb der Taupunktstemperatur der Mischung aus siliziumorganischer Ausgangsverbindung und Trägergas liegt. Geeignete Verdampfungsverfahren werden z. B. in den Internationalen Patentanmeldungen WO 2013/087751 A und WO 2014/187513 A sowie der deutschen Patentanmeldung DE 10 2013 209 673 beschrieben.

Im Rahmen der Erfindung beschreibt der Begriff "Taupunkt" die Temperatur, bei der sich ein Gleichgewichtszustand von kondensierender und verdunstender Flüssigkeit einstellt.

Im Rahmen der vorliegenden Erfindung wird unter einer "Verdampfung" der Vorgang verstanden, bei der das Einsatzmaterial im Wesentlichen von der flüssigen Phase in eine gasförmige Phase überführt wird. Dies geschieht bevorzugt, indem, wie oben beschrieben, Temperaturen verwendet werden, welche oberhalb des Taupunktes der siliziumorganischen Ausgangsverbindung als Hauptkomponente des Einsatzmaterials liegen. Dem Fachmann ist dabei bewusst, dass verfahrenstechnisch nicht ausgeschlossen werden kann, dass kleine Flüssigkeitstropfen des Einsatzmaterials mitgerissen werden können. Somit wird im Verfahrensschritt (1) bevorzugt ein Einsatzmaterialdampf erzeugt, welcher vorzugsweise nicht weniger als 97 Mol.-%, bevorzugt nicht weniger als 98 Mol.-%, besonders bevorzugt nicht weniger als 99 Mol.-%, ganz besonders bevorzugt nicht weniger als 99,9 Mol.-% gasförmige Bestandteile enthält.

Die dampfförmige siliziumorganische Ausgangsverbindung bzw. ein Gemisch aus Trägergas und dampfförmiger siliziumorganischer Ausgangsverbindung wird üblicherweise der Verdampfungskammer entnommen und in einen Brenner geleitet. Vor dem Einleiten in den Brenner wird das dampfförmige Material bzw. die Mischung aus dampfförmigem Material und Trägergas vorzugweise mit Sauerstoff gemischt. In der Flamme wird die siliziumorganische Ausgangsverbindung zu $SiO_2$ oxidiert. Es bildet sich feinteiliges, amorphes $SiO_2$ ($SiO_2$-Ruß), das in Form einer porösen Masse zunächst auf der Oberfläche eines Trägers und später auf der Oberfläche des sich bildenden Sootkörpers abgeschieden wird.

**Verfahrensschritt (2)** - **Zuführen des Einsatzmaterialdampfes zu einer Reaktionszone, in welcher der Einsatzmaterialdampf in Gegenwart von Sauerstoff in einer Flamme verbrannt wird und durch Oxidation und/oder durch Hydrolyse zu $SiO_2$-Sootpartikeln umgesetzt wird**

Im Verfahrensschritt (2) wird der aus Verfahrensschritt (1) resultierende gasförmige Einsatzmaterialdampf zu einer Reaktionszone geführt, in dem der Einsatzmaterialdampf durch Oxidation und/oder oder durch Hydrolyse zu $SiO_2$-Teilchen umgesetzt wird.

Dieser Verfahrensschritt entspricht insbesondere dem bekannten Sootverfahren oder dem bekannten Direktverglasungsverfahren. Die möglichen Ausgestaltungen dieser beiden Verfahren sind dem Fachmann bekannt.

Für die Verbrennung des Einsatzmaterialdampfs wird üblicherweise ein konzentrischer Brenner verwendet, der um den Mittelpunkt des Brennermunds kreisförmig angeordnete Gasaustrittsdüsen aufweist.

Im Rahmen der vorliegenden Erfindung wird eine Verfahrensweise bevorzugt, bei welcher dem Abscheidebrenner in einem zentralen Bereich eine erste, Silizium enthaltende Ausgangskomponente, in einem äußeren Bereich einen Sauerstoffstrom, und zwischen dem zentralen Bereich und dem äußeren Bereich ein Trenngasstrom (Wasserstoff) zugeführt werden.

Die zentrale Düse dient dabei in der Regel zum Zuführen des Einsatzmaterialdampfs, welcher im Rahmen der vorliegenden Erfindung üblicherweise mit einem Trägergas vorgemischt verwendet wird. Darüber hinaus wird dem Einsatzmaterialdampf vorzugsweise Sauerstoff zugesetzt, so dass aus der Mitteldüse des üblicherweise verwendeten konzentrischen Brenners ein Feedstrom resultiert, der neben dem Einsatzmaterialdampf noch das Trägergas und Sauerstoff enthält.

Die zentrale Düse des Brenners wird in der Regel von einer zweiten Düse, die konzentrisch um die Mitteldüse angeordnet ist, umfasst und aus welcher ein Trenngas in den Brenner eingeführt wird. Dieses Trenngas trennt die $SiO_2$-Ausgangsverbindung von dem weiteren Sauerstoffstrom, der aus einer weiteren konzentrisch um die Mitteldüse und die Trenngasdüse angeordnete konzentrische Düse in den Brenner einströmt.

Erfindungsgemäß ist vorgesehen, den Brenner so zu betreiben, dass bei einer targetlosen und im Allgemeinen im Wesentlichen ungestörten Flamme das Verhältnis aus der Halbwertsbreite (Full Width at Half Maximum, $FWHM_{vert}$) der vertikalen Leuchtintensität zu der Halbwertsbreite (Full Width at Half Maximum, $FWHM_{hori}$) der horizontalen Leuchtintensität größer als 10 ist, wobei die Leuchtintensitäten in Candela/mm$^2$ gemessen werden. Dabei werden die Halbwertsbreiten der horizontalen und vertikalen Leuchtintensitäten zunächst bei identischen Gasstromwerten mit einer targetlosen Flamme bestimmt.

Die mittels des Abscheidebrenners erzeugten $SiO_2$-Sootteilchen werden üblicherweise auf einem um seine Längsachse rotierenden Trägerrohr abgeschieden, so dass schichtweise der Sootkörper aufgebaut wird. Hierzu kann der Abscheidebrenner entlang der Längsachse des Trägerrohrs zwischen zwei Wendepunkten hin- und herbewegt werden. Darüber hinaus ist die Verwendung von einem Brennerblock bevorzugt, in welchem sich mehrere Abscheidebrenner mit jeweils einer Flamme befinden. In dem Fall der Verwendung eines Brennerblocks wird mindestens eine Flamme mit der erfindungsgemäßen Charakteristik (Verhältnis aus der Halbwertsbreite (Full Width at Half Maximum, $FWHM_{vert}$) der vertikalen Leuchtintensität zu der Halbwertsbreite (Full Width at Half Maximum, $FWHM_{hori}$) der horizontalen Leuchtintensität) betrieben. In einer weiteren bevorzugten Ausführungsform weisen alle Flammen des Brennerblocks die erfindungsgemäße Charakteristik auf.

Im Rahmen der vorliegenden Erfindung wurde des Weiteren herausgefunden, dass es für die Ausbeuteeffizienz günstig ist, wenn die Luftzahl, d.h. das Verhältnis von Sauerstoff zu Einsatzmaterial, kleiner gleich 1 ist. Erfindungsgemäß ist daher weiter bevorzugt vorgesehen, dass Sauerstoff im Verfahrensschritt (2) unterstöchiometrisch im Verhältnis zu dem zu hydrolysierenden und/oder polymerisierenden Einsatzmaterialdampf und weiterer Brennstoffgase (beispiels-

weise $H_2$ oder $CH_4$ aus anderen Düsen) verwendet wird.

Weiter bevorzugt sind Luftzahlen kleiner gleich 0,95, noch weiter bevorzugt kleiner gleich 0,90, noch weiter bevorzugt kleiner gleich 0,85, noch weiter bevorzugt kleiner gleich 0.80, noch weiter bevorzugt kleiner gleich 0,78, noch weiter bevorzugt kleiner gleich 0,76.

Durch die Einstellung der Luftzahl auf die zuvor genannten bevorzugten Bereiche ist es möglich, zusammen mit der erfindungsgemäßen Einstellung des Verhältnisses aus der Halbwertsbreite (Full Width at Half Maximum, $FWHM_{vert}$) der vertikalen Leuchtintensität zu der Halbwertsbreite (Full Width at Half Maximum, $FWHM_{hori}$) der horizontalen Leuchtintensität, die Abscheideeffizienz weiter zu verbessern, da die Eigenschaften der erfindungsgemäß verwendeten Flamme durch die Einstellung einer Luftzahl auf einen Wert kleiner gleich 1 beeinflusst wird, was zu einer verbesserten Abscheideeffizienz führt.

Die Verwendung von einem fetteren Brenngemisch (einhergehend mit einer Luftzahl von kleiner 1) führt zu einem späteren, lokalen Zünden nur der Randgebiete der Flamme. Es zünden dabei zuerst nur die äußeren Randbereiche des Feeddüsenstromes, in welchen bereits genug $O_2$ aus der Oxidationsstoffdüse eindiffundiert ist. Der Kernbereich der Flamme ist durch das zu fette Gemisch zündunwilliger. Dadurch zündet nur ein kleineres Gasvolumen gleichzeitig und der Sauerstoff muss erst nachdiffundieren. Die Expansion der heißen Verbrennungsgase von Gebieten, die durchgezündet haben, macht die Flamme turbulenter. Der Effekt ist selbstverstärkend, da die erhöhte Turbulenz die Vermischung mit Sauerstoff fördert. Das Gasvolumen, das über eine zündfähige Mischung verfügt, streckt sich bei der erfindungsgemäßen Verfahrensweise weiter nach oben und hat geringere laterale Ausdehnung. Das führt zu einer viel laminareren Flamme. Die damit einhergehende Auswirkung ist, dass die schmalere, laminarere Flamme sich besser an den Sootkörper anlegt und einen stabileren Staupunkt ausbildet. Dieses führt zu kürzeren Diffusionswegen für die $SiO_2$-Teilchen zur Abscheidungsoberfläche des Sootkörpers und erhöht die Verweilzeit im Staupunkt, was insgesamt eine höhere Abscheideeffizienz bewirkt.

Die herabgesetzte Zündfähigkeit in der fetteren Gasanordnung bewirkt eine Verkleinerung des durchschnittlichen Durchmessers der Gasregionen, die gleichzeitig zünden (kleinere "Flamelets"). Die starke Volumenerhöhung durch thermische Expansion und Molgewinn (beispielsweise erzeugt 1 mol OMCTS-Gas das x-fache an Molen Verbrennungsgase) durch Zersetzung erzeugt Druckwellen, die die Flamme viel turbulenter machen. Damit resultiert durch den gestreckteren Bereich der Verbrennung bei der fetteren Gasanordnung eine laminarere Flamme mit höherer Ausbrennlänge mit den zuvor beschriebenen Vorteilen. Dabei ist zu berücksichtigen, dass im Brenner- und Flammenzentrum bei der erfindungsgemäßen Verfahrensweise nur Feedstrom (Sauerstoff-enthaltend) und Wasserstoff vorliegen, die gemeinsam zu fett sind, um schnell zu zünden und dass der Sauerstoff $O_2$ der äußeren Düse wegen geringerer Turbulenz erst später ins Zentrum, verteilt auf eine längere Wegstrecke, gelangt.

Da im Rahmen der vorliegenden Erfindung das Einsatzmaterial vorzugsweise zusammen mit einem Trägergas und Sauerstoff aus der zentralen Düse des vorzugsweise konzentrischen Brenners in die Brennzone abgegeben wird, ist zu berücksichtigen, dass sich die Menge an Sauerstoff zur Berechnung der Luftzahl aus der Beimengung des Sauerstoffs in den Strom des Einsatzmaterials und dem zusätzlich verwendeten Sauerstoff in der äußeren Düse (Brenngas bzw. Oxidiergas) des konzentrischen Brenners ergibt.

**Verfahrensschritt (3)** - **Abscheiden der $SiO_2$-Teilchen**

Im Verfahrensschritt (3) werden die aus Verfahrensschritt (2) resultierenden $SiO_2$-Teilchen auf einer Ablagerungsfläche abgeschieden. Die Ausgestaltung dieses Verfahrensschritts liegt im Können und Wissen des Fachmanns.

Hierzu werden die im Verfahrensschritt (2) gebildeten $SiO_2$-Teilchen auf einem rotierenden Träger schichtweise unter Bildung eines porösen Sootkörpers abgeschieden.

Während des Abscheidens der Soot-Teilchen wird der Abstand zwischen dem Brenner und dem Trägermaterial gegebenenfalls verändert, um die zuvor bereits beschriebene Voraussetzung zu erfüllen.

**Verfahrensschritt (4)** - **gegebenenfalls Trocknen und Verglasen**

Im Verfahrensschritt (4) werden die aus Verfahrensschritt (3) resultierenden $SiO_2$-Teilchen unter Bildung von synthetischem Quarzglas gegebenenfalls getrocknet und verglast. Dieser Verfahrensschritt ist insbesondere dann notwendig, wenn die zuvor durchgeführten Verfahrensschritte gemäß einem Sootverfahren durchgeführt wurden. Die Ausgestaltung dieses Verfahrensschritts liegt im Können und Wissen des Fachmanns.

Das erfindungsgemäße Verfahren eignet sich insbesondere zur Herstellung von Quarzglas nach dem "Sootverfahren", bei welchem die Temperatur beim Abscheiden der $SiO_2$-Teilchen im Verfahrensschritt (3) so niedrig ist, dass eine poröse $SiO_2$-Sootschicht erhalten wird, die im separaten Verfahrensschritt (4) zu synthetischem Quarzglas getrocknet und verglast wird.

Das erfindungsgemäße Verfahren eignet sich zur Herstellung von synthetischem Quarzglas, welches als ein Außen- oder Innenabscheideverfahren durchgeführt wird. Wenn das erfindungsgemäße Verfahren als Außenabscheideverfahren durchgeführt wird, so handelt es sich bevorzugt um ein OVD-Verfahren (outside Vapour Phase Deposition), VAD-Verfahren (Vapour Phase axial Deposition) oder Soot-Boule-Verfahren.

Durch das erfindungsgemäße Verfahren lassen sich die Herstellungskosten für Quarzglas reduzieren.

Weiterer Gegenstand der vorliegenden Erfindung ist eine Vorrichtung zur Herstellung von synthetischem Quarzglas, wobei die Vorrichtung umfasst:

(a) mindestens eine Verdampferzone zum Verdampfen mindestens eines Einsatzmaterials, das mindestens eine siliziumorganische Ausgangsverbindung enthält, unter Bildung eines Einsatzmaterialdampfes;

(b) mindestens eine Reaktionszone, in welche der Einsatzmaterialdampf aus der Verdampferzone (a) geführt wird und in welcher das Einsatzmaterial durch Pyrolyse oder durch Hydrolyse zu $SiO_2$-Teilchen umgesetzt wird, wobei die Reaktionszone einen Brenner umfasst; und

(c) mindestens eine Abscheidezone mit einer Ablagerungszone für die aus der Reaktionszone (c) resultierenden $SiO_2$-Teilchen unter Bildung von synthetischem Quarzglas, wobei die Ablagerungszone einen Sootkörper umfasst.

Die erfindungsgemäße Vorrichtung ist so ausgebildet, dass der verwendete Brenner eine Flamme erzeugt, die in einem targetlosen Zustand ein Verhältnis aus der Halbwertsbreite (Full Width at Half Maximum, $FWHM_{vert}$) der vertikalen Leuchtintensität zu der Halbwertsbreite (Full Width at Half Maximum, $FWHM_{hori}$) der horizontalen Leuchtintensität größer als 10 aufweist.

Zur Definition der vertikalen und horizontalen Leuchtintensität wird auf obige Ausführungen verwiesen.

In Übereinstimmung mit den obigen Ausführungen zu dem erfindungsgemäßen Verfahren wird die Flamme des Brenners vorzugsweise so eingestellt, dass in einem targetlosen Zustand ein Verhältnis aus der Halbwertsbreite (Full Width at Half Maximum, $FWHM_{vert}$) der vertikalen Leuchtintensität zu der Halbwertsbreite (Full Width at Half Maximum, $FWHM_{hori}$) der horizontalen Leuchtintensität größer als 12, weiter bevorzugt größer als 14, noch weiter bevorzugt größer als 15, realisiert wird.

Weitere gegenständliche Merkmale ergeben sich aus der vorstehenden Verfahrensbeschreibung.

Schließlich betrifft die vorliegende Erfindung noch die Verwendung dieser Vorrichtung zur Herstellung von synthetischem Quarzglas.

## Ausführungsbeispiel

Flüssiges Einsatzmaterial OMCTS wird zusammen mit Stickstoff als Trägergas, welches auf 180 °C vorgewärmt wurde, in einem Verdampfer gemäß der Ausgestaltung der Internationalen Patentanmeldung PCT/EP2012/075346 bei 170 °C verdampft. Das Stickstickstoff-OMCTS-Dampfgemisch wird zusammen mit Sauerstoff ($O_2$-Mix) in einen konzentrischen Brenner eingeführt, wobei der Brenner unter den folgenden Bedingungen betrieben wird:

| Versuch | Luftzahl | Stoffdüse | | | $H_2$ Düse | $O_2$ Düse |
|---------|----------|-----------|----------|----------------|-----------|-----------|
| | | OMCTS [kg/h] | $O_2$ Mix [slm] | $N_2$ Träger [slm] | $H_2$ Trenn [slm] | $O_2$ Brenn [slm] |
| 1 | 0,78 | Konstant | variabel | Konstant | Konstant | variabel |
| 2 | 1 | Konstant | variabel | Konstant | Konstant | variabel |
| 3 | 1,23 | Konstant | variabel | Konstant | Konstant | variabel |

Die Menge an Sauerstoff in Mix-Strom und in der $O_2$-Düse wird so variiert, dass die gewünschte Luftzahl erreicht wird.

Ergebnisse:

| Versuch | Sootkörper | | | | Halbwertsbreiten | | |
|---------|------------|-----------------|-----------|---------------|-------------------|------------------------|----------|
| | Gewicht [g] | Durchmesser [mm] | Dichte [%] | Effizienz [%] | $FWHM_{vert}$ [mm] | Peak Position [mm] | Peakhöhe |
| 1 | 8319 | 280 | 18,4 | 72,81 | 134,6 | 102,0 | 4470811,9 |
| 2 | 7620 | 226 | 27,3 | 66,69 | 222,4 | 61,9 | 1642016,9 |

(fortgesetzt)

| Versuch | Sootkörper | | | | Halbwertsbreiten | | |
|---|---|---|---|---|---|---|---|
| | Gewicht [g] | Durchmesser [mm] | Dichte [%] | Effizienz [%] | $FWHM_{vert}$ [mm] | Peak Position [mm] | Peakhöhe |
| 3 | 6173 | 192 | 34,4 | 54,03 | 216,5 | 102,0 | 1872177,6 |

| Versuch | Sootkörper | | | | Halbwertsbreiten | | |
|---|---|---|---|---|---|---|---|
| | Gewicht [g] | Durchmesser [mm] | Dichte [%] | Effizienz [%] | $FWHM_{hori}$ [mm] | Peak Position [mm] | Peakhöhe |
| 1 | 8319 | 280 | 18,4 | 72,81 | 9,5 | 1,7 | 50884671,7 |
| 2 | 7620 | 226 | 27,3 | 66,69 | 26,2 | -2,8 | 10824741,9 |
| 3 | 6173 | 192 | 34,4 | 54,03 | 25,2 | -5,0 | 12583379,8 |

| Versuch | Verhältnis $FWHM_{vert}$ / $FWHM_{hori}$ | Kommentar |
|---|---|---|
| 1 | 14,2 | Erfindungsgemäß |
| 2 | 8,5 | Nicht erfindungsgemäß |
| 3 | 8,6 | Nicht erfindungsgemäß |

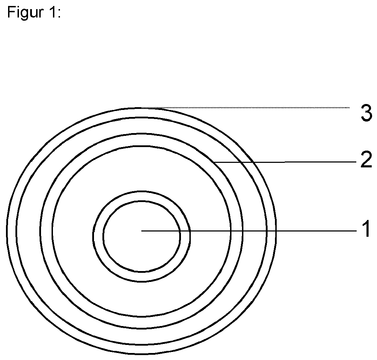

Die in diesem Ausführungsbeispiel verwendete Brennergeometrie ist in der Abbildung 1 dargestellt, in welcher

1: die innere Düse;

2: die mittlere Düse; und

3: die äußere Düse

darstellen.

Das erfindungsgemäße Verfahren (Versuch 1) führt zu einer verbesserten Abscheideeffizienz als die Vergleichsversuche (Versuche 2 und 3).

Die Kalibrierung der Lichtstärke von $SiO_2$-Syntheseflammen erfolgte in dem vorstehenden Versuch wie folgt: Die Kalibrierung der Lichtstärke der Flamme wurde durch einen Vergleich mit einer kalibrierten Lichtquelle durchgeführt (LOT-Oriel K-150WH mit Gossen-Metrawatt Konstanter SLP120-80/snTD4541060001; erste Kalibrierung durch opto.cal SCS 053, Zertifikatsnummer 09333 am 4.11.2009; zweite Kalibrierung durch opto.cal SCS 053, Zertifikatsnummer 16428 am 9.12.2016).

Um die Empfindlichkeit der Kamera zu kalibrieren, wurde die Kalibrierlichtquelle in der typischen Entfernung montiert, in der die Messungen durchgeführt werden. Für den aktuellen Aufbau beträgt der Arbeitsabstand 450 mm. Aufgrund der perfekten Lambert'schen Emissionscharakteristik verhält sich die Lichtstärke in einer 1/r2 Weise, so dass in den Versuchen der Lichtstrom mit dem für die Kalibrierung durch opto.cal verwendeten Abstand für den Arbeitsabstand berechnet werden kann.

Im Kalibrierprotokoll ist die Beleuchtungsstärke der Zielkalibrierungsparameter. Für diese Kalibrierung ist die Leuchtdichte durch den Bezug zur Emissionsfläche besser geeignet. Deshalb wurde die Einheit der Beleuchtungsstärke [Ev] = lm/m2 = lx in die Einheit der Leuchtdichte [Lv] = cd/m2 bzw. Cd/mm2 umgerechnet.

Für Lambert'sche Strahler erfordert diese Umrechnung die zusätzliche Kenntnis der Abstände bei der Kalibrierung und Messung. Diese spezifische Lichtquelle hat eine Beleuchtungsstärke von Ev = 293,5 lx in 250 mm Entfernung, während die Lichtstärke Iv = 90,59 Cd im Abstand von 450 mm beträgt; der Arbeitsabstand für die Versuche. Die Anwendung der Lichtintensität ist eine Einheit auf Detektorbasis, d.h. sie basiert auf der Detektorfläche und integriert die gesamte Lichtemission. Um eine emitterbasierte Messung zu ermöglichen, wird die effektive Emitterfläche einbezogen, so dass die resultierende Einheit die Leuchtdichte ist.

Die Anwendung photometrischer Einheiten (Lux/Lumen/Candela) nutzt die CIE-Leuchtdichtefunktion, um die spektrale Empfindlichkeit des menschlichen Auges nachzuahmen. Die Kalibrierlichtquelle und die Flammenemissionen weisen unterschiedliche spektrale Eigenschaften auf. Daher wird die CIE-Helligkeitsfunktion verwendet, um die wellenlängenabhängigen Emissionen zu gewichten und um photometrische Einheiten zu erhalten.

Die verwendete Kamera ist eine Basler acA1300-200um mit Basler C125-0818-5M-P f8mm. Die Kamera wurde einmal so eingestellt, dass sie technisch sinnvolle Messsignale liefert, und dann wurden die Brennweite, die Blende und die Position der Kamera zur Flamme fixiert und über die gesamten Messungen konstant gehalten.

Das spektral aufgelöste Emissionsspektrum der Kalibrierlichtquelle wird im Kalibrierprotokoll mit einer Wellenlängenauflösung von 2 nm von 280 nm bis 800 nm angegeben, was groß genug ist, um die gesamte CIE-Leuchtkraftfunktion abzudecken. Die Emissionen der Flamme wurden für verschiedene Bedingungen spektral aufgelöst.

Mit diesen Voraussetzungen ist es möglich, die Lichtstärke der Flamme gegen eine kalibrierte Lichtquelle zu messen, die auf das Schweizerische Metrologie-Institut rückführbar ist.

## Patentansprüche

1.  Verfahren zur Herstellung von synthetischem Quarzglas, **gekennzeichnet durch** die folgenden Verfahrensschritte:

    (1) Verdampfen eines Einsatzmaterials, das mindestens eine siliziumorganische Ausgangsverbindung enthält, unter Bildung eines Einsatzmaterialdampfes;
    (2) Zuführen des Einsatzmaterialdampfes aus Verfahrensschritt (1) zu einer Reaktionszone, in welcher der Einsatzmaterialdampf in Gegenwart von Sauerstoff in einer Flamme verbrannt wird und durch Oxidation und/oder durch Hydrolyse zu $SiO_2$-Sootteilchen umgesetzt wird;
    (3) Abscheiden der aus Verfahrensschritt (2) resultierenden $SiO_2$-Sootteilchen auf einer Ablagerungsfläche unter Ausbildung eines Sootkörpers; und
    (4) gegebenenfalls Trocknen und Verglasen des aus Verfahrensschritt (3) resultierenden Sootkörpers unter Bildung von synthetischem Quarzglas;

    **dadurch gekennzeichnet, dass**
    die in dem Verfahren verwendete Synthese-Flamme in einem targetlosen Zustand ein Verhältnis aus der Halbwertsbreite (Full Width at Half Maximum, $FWHM_{vert}$) der vertikalen Leuchtintensität zu der Halbwertsbreite (Full Width at Half Maximum, $FWHM_{hori}$) der horizontalen Leuchtintensität größer als 10 aufweist.

2.  Verfahren nach Anspruch 1, **dadurch gekennzeichnet, dass** die in dem Verfahren verwendete Flamme in einem targetlosen Zustand ein Verhältnis aus der Halbwertsbreite (Full Width at Half Maximum, $FWHM_{vert}$) der vertikalen Leuchtintensität zu der Halbwertsbreite (Full Width at Half Maximum, $FWHM_{hori}$) der horizontalen Leuchtintensität größer als 12 aufweist.

3.  Verfahren nach Anspruch 1 oder 2, **dadurch gekennzeichnet, dass** die in dem Verfahren verwendete Flamme in einem targetlosen Zustand ein Verhältnis aus der Halbwertsbreite (Full Width at Half Maximum, $FWHM_{vert}$) der vertikalen Leuchtintensität zu der Halbwertsbreite (Full Width at Half Maximum, $FWHM_{hori}$) der horizontalen Leuchtintensität größer als 14 aufweist.

4.  Verfahren nach einem der Ansprüche 1 bis 3, **dadurch gekennzeichnet, dass** die in dem Verfahren verwendete Flamme in einem targetlosen Zustand ein Verhältnis aus der Halbwertsbreite (Full Width at Half Maximum, $FWHM_{vert}$) der vertikalen Leuchtintensität zu der Halbwertsbreite (Full Width at Half Maximum, $FWHM_{hori}$) der horizontalen Leuchtintensität größer als 15 aufweist.

5.  Verfahren nach einem der Ansprüche 1 bis 4, **dadurch gekennzeichnet, dass** die im Verfahrensschritt (2) verwendeten aktiv zugeführten Brennergase zusammen eine Luftzahl kleiner oder gleich 1 aufweisen.

6.  Verfahren nach Anspruch 1 bis 5, **dadurch gekennzeichnet, dass** die im Verfahrensschritt (2) verwendeten aktiv zugeführten Brennergase zusammen eine Luftzahl von 0,85 oder kleiner aufweisen.

7.  Verfahren nach einem der Ansprüche 1 bis 6, **dadurch gekennzeichnet, dass** die im Verfahrensschritt (2) verwendeten aktiv zugeführten Brennergase zusammen eine Luftzahl von 0,76 oder kleiner aufweisen.

8. Verfahren nach einem der Ansprüche 1 bis 7, **dadurch gekennzeichnet, dass** der Verfahrensschritt (2) mittels eines Brenners mit einem konzentrischen Querschnitt durchgeführt wird, wobei im Inneren des konzentrischen Querschnitts der Einsatzmaterialdampf zusammen mit Sauerstoff als Feed-Mix in die Brennerflamme eingeführt wird und der Feed-Mix durch ein Trenngas von dem Sauerstoff-enthaltenden Oxidiergas getrennt ist.

9. Verfahren nach einem der Ansprüche 1 bis 8, **dadurch gekennzeichnet, dass** die siliziumorganische Ausgangsverbindung ausgewählt wird aus der Gruppe, bestehend aus Hexamethylcyclotrisiloxan (D3), Octamethylcyclotetrasiloxan (D4), Dekamethylcyclopentasiloxan (D5), Decamethylcyclohexasiloxan (D6), Tetradekamethylcycloheptasiloxan (D7), Hexadecamethylcyclooctasiloxan (D8), deren linearen Homologen und beliebigen Mischungen der vorgenannten Verbindungen.

10. Verfahren nach Anspruch 9, **dadurch gekennzeichnet, dass** die Polyalkylsiloxanverbindung Octamethylcyclotetrasiloxan (D4) ist.

11. Vorrichtung zur Herstellung von synthetischem Quarzglas, **dadurch gekennzeichnet, dass** die Vorrichtung umfasst:

(a) mindestens eine Verdampferzone zum Verdampfen mindestens eines Einsatzmaterials, das mindestens eine siliziumorganische Ausgangsverbindung enthält, unter Bildung eines Einsatzmaterialdampfes;
(b) mindestens eine Reaktionszone, in welche der Einsatzmaterialdampf aus der Verdampferzone (a) geführt wird und in welcher das Einsatzmaterial durch Pyrolyse oder durch Hydrolyse zu $SiO_2$-Teilchen umgesetzt wird, wobei die Reaktionszone einen Brenner mit einer Flamme umfasst; und
(c) mindestens eine Abscheidezone mit einer Ablagerungszone für die aus der Reaktionszone (c) resultierenden $SiO_2$-Teilchen unter Bildung von synthetischem Quarzglas, wobei die Ablagerungszone einen Sootkörper umfasst,

**dadurch gekennzeichnet, dass** der Brenner so eingestellt wird, dass seine Flamme in einem targetlosen Zustand ein Verhältnis aus der Halbwertsbreite (Full Width at Half Maximum, $FWHM_{vert}$) der vertikalen Leuchtintensität zu der Halbwertsbreite (Full Width at Half Maximum, $FWHM_{hori}$) der horizontalen Leuchtintensität größer als 10 aufweist, wobei die Leuchtintensitäten in Candela/mm$^2$ gemessen werden.

12. Vorrichtung nach Anspruch 11, **dadurch gekennzeichnet, dass** die Vorrichtung einen Brenner umfasst, der mit einer Luftzahl kleiner oder gleich 1 betrieben wird.

13. Vorrichtung nach Anspruch 11 oder 12, **dadurch gekennzeichnet, dass** die Vorrichtung einen Brenner umfasst, der mit einer Luftzahl kleiner oder gleich 0,85 betrieben wird.

14. Vorrichtung nach einem der Ansprüche 11 bis 13, **dadurch gekennzeichnet, dass** die Vorrichtung einen Brenner umfasst, der mit einer Luftzahl kleiner oder gleich 0,76 betrieben wird.

15. Verwendung einer Vorrichtung gemäß einem der Ansprüche 11 bis 14 zur Herstellung von synthetischem Quarzglas.

Figur 1:

Europäisches
Patentamt

European
Patent Office

Office européen
des brevets

# EUROPÄISCHER RECHERCHENBERICHT

**Nummer der Anmeldung**

EP 20 21 4538

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 10 2011 121153 B3 (HERAEUS QUARZGLAS [DE]) 21. März 2013 (2013-03-21) * Ansprüche 1,2,10; Abbildung 1; Tabelle 1 * ----- | 1,5-7, 9-15 | INV. C03B19/14 C03B20/00 |

| RECHERCHIERTE SACHGEBIETE (IPC) |
|---|
| C03B |

Der vorliegende Recherchenbericht wurde für alle Patentansprüche erstellt

| Recherchenort | Abschlußdatum der Recherche | Prüfer |
|---|---|---|
| Den Haag | 7. Mai 2021 | Creux, Sophie |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

……………………………………………………………………………
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 21 4538

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-05-2021

| Im Recherchenbericht angeführtes Patentdokument | Datum der Veröffentlichung | Mitglied(er) der Patentfamilie | | Datum der Veröffentlichung |
|---|---|---|---|---|
| DE 102011121153 B3 | 21-03-2013 | CN | 103987670 A | 13-08-2014 |
| | | DE | 102011121153 B3 | 21-03-2013 |
| | | EP | 2791070 A1 | 22-10-2014 |
| | | JP | 6058693 B2 | 11-01-2017 |
| | | JP | 2015505809 A | 26-02-2015 |
| | | KR | 20140095560 A | 01-08-2014 |
| | | US | 2014349830 A1 | 27-11-2014 |
| | | WO | 2013087678 A1 | 20-06-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011121153 A
- DE 10102611 A
- US 8230701 B
- WO 2013087751 A
- WO 2014187513 A
- DE 102013209673
- EP 2012075346 W